# EUROPEAN PATENT APPLICATION

(11) **EP 2 921 505 A1**
(43) Date of publication of application: **23.09.2015**
(21) Application number: 13855009.0
(22) Date of filing: 12.11.2013
(51) Int. Cl.: C08C 19/20, C08F 2/38, C08J 3/24, C08K 5/38, C08L 15/02

(54) **XANTHOGEN-MODIFIED CHLOROPRENE RUBBER AND PRODUCTION METHOD THEREFOR**

(30) Priority: 16.11.2012 JP 2012252258
(71) Applicant: Tosoh Corporation, Yamaguchi 746-8501 (JP)
(72) Inventor: NAGAYA Naoto, Shunan-shi Yamaguchi 746-8501 (JP)
(74) Representative: Vigand, Philippe
(86) International application number: PCT/JP2013/080518
(87) International publication number: WO 2014/077236

(57) **Abstract**

The present invention provides xanthogen-modified chloroprene rubber that maintains the basic characteristics of conventional chloroprene rubber while exhibiting good dynamic characteristics, and a production method for the xanthogen-modified chloroprene rubber. The xanthogen-modified chloroprene rubber and the production method therefor are characterized in that a molecular terminal of the chloroprene rubber comprises a structure that is represented by formula (1). In the formula, R represents an alkyl group, and x is an integer of 1 or greater.

## Description

### TECHNICAL FIELD

The present invention relates to xanthogen-modified chloroprene rubber and a production method therefor, and particularly relates to xanthogen-modified chloroprene rubber having excellent dynamic characteristics and a production method therefor.

### BACKGROUND

Chloroprene rubber has been widely used as a material for various industrial parts including automotive parts and other parts due to its well-balanced processability, mechanical strength, weatherability, oil resistance, flame retardancy, adhesivity, and the like. In particular, it has been critical to enhance its dynamic characteristics (low heat build-up) in the field of transmission belts, in order to suppress heat build-up in rubber due to vibration and to transmit motion of a device efficiently.

As methods for achieving this goal while maintaining the physical properties of chloroprene rubber, methods that use a xanthogen disulfide as a chain transfer agent (Patent Documents 1 to 3), a method in which sulfur is copolymerized into a polymer (Patent Document 4), and the like have been proposed so far.

However, the conventional methods that use xanthogen disulfide as a chain transfer agent do not achieve sufficient dynamic characteristics. Moreover, although conventional methods, in which sulfur is copolymerized enhance dynamic characteristics sufficiently, productivity thereby is poor since a peptization step is required to adjust viscosity after the polymerization.

### PRIOR ART DOCUMENT

### Patent Document

Patent Document 1: Japanese Unexamined Patent Application Publication No. 2006-307156A
Patent Document 2: Japanese Unexamined Patent Application Publication No. H07-286071A
Patent Document 3: Japanese Unexamined Patent Application Publication No. H10-060049A
Patent Document 4: Japanese Unexamined Patent Application Publication No. H07-062029A

### SUMMARY OF THE INVENTION

### Problems to be Solved by the Invention

The present invention has been completed in the light of the problems described above. An object of the present invention is to provide chloroprene rubber that maintains the basic characteristics of conventional chloroprene rubber while exhibiting significantly enhanced dynamic characteristics, and a production method for the chloroprene rubber.

### Means to Solve the Problem

As a result of diligent research to solve the above problems, the present inventors have completed the present invention.

Specifically, the gist of the present invention lies in the following [1] to [4].
[1] A xanthogen-modified chloroprene rubber comprising a structure represented by general formula (1) below at a molecular terminal of a chloroprene rubber: 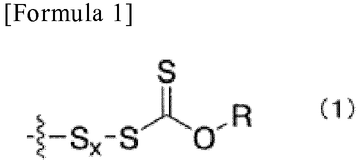 wherein, R represents an alkyl group, and x is an integer of 1 or greater.
[2] A xanthogen-modified chloroprene rubber comprising dialkyl xanthogen polysulfide represented by general formula (2) below: 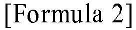 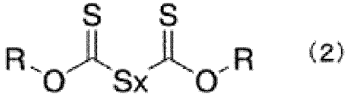 wherein, R represents an alkyl group, and x is an integer of 3 or greater.
[3] A method for producing the xanthogen-modified chloroprene rubber described in [1] or [2] above, comprising emulsion polymerization of chloroprene or a mixture of chloroprene and a monomer copolymerizable with the chloroprene, in the presence of dialkyl xanthogen polysulfide represented by general formula (2) below: 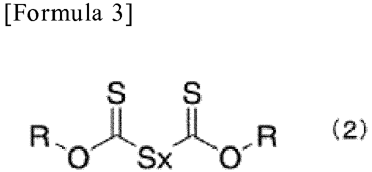 wherein, R represents an alkyl group, and x is an integer of 3 or greater.
[4] A vulcanized product of a xanthogen-modified chloroprene rubber composition obtained by kneading the xanthogen-modified chloroprene rubber described in [1] or [2] above with a compounding agent and then vulcanizing the kneaded mixture.

### EFFECT OF THE INVENTION

The xanthogen-modified chloroprene rubber of the present invention exhibits significantly enhanced dynamic characteristics while maintaining the basic characteristics of conventional chloroprene rubber.

### BEST MODE FOR CARRYING OUT THE INVENTION

The present invention will be further described in detail hereinafter.

The xanthogen-modified chloroprene rubber of the present invention includes a structure represented by general formula (1) below at a molecular terminal of the chloroprene rubber.

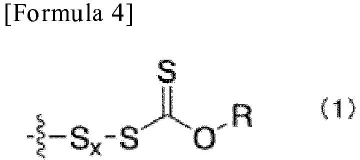

In the formula, R represents an alkyl group, and x is an integer of 1 or greater.

Examples of the alkyl group represented by R include a methyl group, ethyl group, isopropyl group, butyl group, and the like; and may have one of these alkyl groups or two or more types of these alkyl groups.

By having a structure represented by general formula (1) at a molecular terminal of the chloroprene rubber, the xanthogen-modified chloroprene rubber of the present invention exhibits significantly enhanced dynamic characteristics.

The xanthogen-modified chloroprene rubber of the present invention includes dialkyl xanthogen polysulfide represented by general formula (2) below.

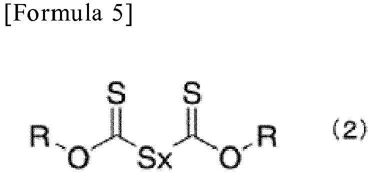

In the formula, R represents an alkyl group, and x is an integer of 3 or greater.

Examples of the dialkyl xanthogen polysulfide represented by general formula (2) include dimethyl xanthogen polysulfide, diethyl xanthogen polysulfide, diisopropyl xanthogen polysulfide, dibutyl xanthogen polysulfide, and the like; and may have one of these or two or more types of these.

The content of the dialkyl xanthogen polysulfide in the xanthogen-modified chloroprene rubber of the present invention is not particularly limited; however, in order to enhance processability and reduce the effect against vulcanization behavior, the content is preferably from 0.01 to 0.50 parts by weight, and more preferably from 0.05 to 0.30 parts by weight, per 100 parts by weight of the chloroprene rubber.

The method for producing the xanthogen-modified chloroprene rubber of the present invention will be further described in detail hereinafter.

Chloroprene alone or a mixture of chloroprene and a monomer copolymerizable with the chloroprene is used as raw materials.

Examples of the copolymerizable monomer include 2,3-dichloro-1,3-butadiene, 2-cyano-1,3-butadiene, 1-chloro-1,3-butadiene, 1,3-butadiene, styrene, acrylonitrile, methyl methacrylate, methacrylic acid, acrylic acid, and the like; and one of these copolymerizable monomers may be used, or two or more types of these copolymerizable monomers may be used in combination. Although the amount of the monomer(s) present is not particularly limited, it is preferably from 0 to 30% by weight and does not impair the properties of chloroprene rubber.

In the method for producing the xanthogen-modified chloroprene rubber of the present invention, polymerization reaction is performed by adding a particular chain transfer agent to chloroprene (or a mixture of chloroprene and a monomer copolymerizable with the chloroprene) and mixing a water-based emulsion containing an emulsifier to suspend the chloroprene (or the mixture).

As the particular chain transfer agent, dialkyl xanthogen polysulfide represented by general formula (2) below is used. One type or a combination of two or more types may be used as this dialkyl xanthogen polysulfide. Since the chloroprene rubber of the present invention is modified using this dialkyl xanthogen polysulfide, the chloroprene rubber of the present invention is described as xanthogen-modified chloroprene rubber.

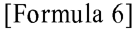

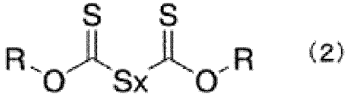

In the formula, R represents an alkyl group, and x is an integer of 3 or greater.

Although the amount of the dialkyl xanthogen polysulfide represented by general formula (2), which is the chain transfer agent, is not particularly limited as long as the amount is an amount that is used in typical radical polymerization for adjusting molecular weights, the amount is preferably from 0.1 to 1 parts by weight per 100 parts by weight of the monomer mixture without the chain transfer agent, in order to adjust the molecular weight of the resulting chloroprene rubber to a target molecular weight, prevent the resulting chloroprene rubber from having a crosslinked polymer structure, and enable processing and molding as chloroprene rubber.

Furthermore, dialkyl xanthogen polysulfide represented by general formula (2) and dialkyl xanthogen disulfide represented by general formula (3) below may be used in combination as the particular chain transfer agent. The total amount of dialkyl xanthogen polysulfide and dialkyl xanthogen disulfide that are used is preferably from 0.1 to 1 parts by weight per 100 parts by weight of the monomer mixture without the chain transfer agent. Furthermore, the amount of the dialkyl xanthogen polysulfide is preferably 50 parts by weight or greater per 100 parts by weight of the total amount of the dialkyl xanthogen polysulfide and the dialkyl xanthogen disulfide.

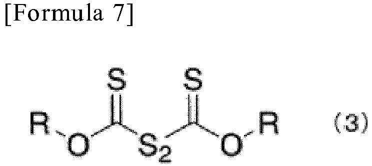

In the formula, R represents an alkyl group.

Examples of the emulsifier include anionic emulsifiers, nonionic emulsifiers, cationic emulsifiers, amphoteric emulsifiers, and the like. Examples of the anionic emulsifier include higher fatty acid salts, alkenyl succinates, rosin acid salts, sodium alkyl sulfates, sodium higher alcohol sulfuric acid esters, alkylbenzene sulfonates, alkyldiphenylether disulfonates, sulfonates of higher fatty acid amide, sulfates of higher fatty acid alkylol amide, alkyl sulfobetaines, and the like. Examples of the nonionic emulsifier include polyoxyethylene alkyl ethers, polyoxyethylene styrenated phenyl ethers, polyoxyethylene sorbitan fatty acid esters, higher fatty acid alkanolamides, polyvinylalcohols, and the like. Examples of the cationic emulsifier include alkylamine salts, quaternary ammonium salts, alkylether type quaternary ammonium salts, and the like. Examples of the amphoteric emulsifier include alkyl betaines, alkyl sulfobetaines, alkyl amine oxides, and the like. Any one or more types of these emulsifiers described above may be used alone or in combination.

Polymerization is preferably performed by adding a catalyst solution while the polymerization system having a pH of 7 to 13 is mixed and stirred at a temperature of 10 to 60°C. As a pH adjusting agent, any one or more types of, for example, basic compounds, such as sodium hydroxide, potassium hydroxide, sodium phosphate, potassium phosphate, triethylamine, diethylamine, triethanolamine, diethanolamine, ethanolamine, and ammonia, may be used alone or in combination.

As a catalyst for initiating polymerization (polymerization initiator), for example, potassium persulfate, ammonium persulfate, hydrogen peroxide, t-butyl hydroperoxide, and the like is used.

Polymerization is performed in a manner that the polymerization conversion rate thereof reaches approximately from 40 to 95%, and then a small amount of polymerization inhibitor is added to terminate the polymerization.

Examples of the polymerization inhibitor include thiodiphenylamine, 4-t-butyl catechol, 2,6-di-t-butyl-4-methylphenol, 2,2'-methylene bis(4-ethyl-6-t-butylphenol), 4,4'-thiobis(3-methyl-6-t-butylphenol), 2,2'-methylene bis(4-methyl-6-t-butylphenol), hydroquinone, N,N-diethylhydroxylamine, and the like. Any one or more types of these polymerization inhibitors may be used alone or in combination.

After unreacted monomers are removed and collected by a steam stripping method under reduced pressure, the obtained chloroprene rubber latex is frozen and solidified using a conventional method to separate the rubber component. After the rubber component is separated and dried, the target xanthogen-modified chloroprene rubber is obtained.

The obtained xanthogen-modified chloroprene rubber also provides a vulcanized product of a chloroprene rubber composition when a xanthogen-modified chloroprene rubber composition is formed by kneading the xanthogen-modified chloroprene rubber with various compounding agents and then vulcanized by a conventional method.

The compounding agent in the chloroprene rubber composition is at least one type selected from fillers, plasticizers, rubber softening agents, or the like that are typically added to the chloroprene rubber composition. Examples of the fillers include carbon black, clay, talc, diatomaceous earth, calcium carbonate, magnesium carbonate, silicic acid, silicic acid compounds, white carbon, and the like. Among these, carbon black is preferable. The type of the carbon black is not particularly limited. For example, SRF, FEF, MAF, HAF, FT, MT, and the like can be used. The filler is added preferably in an amount from 15 to 80 parts by weight, and more preferably, the carbon black is added in an amount from 30 to 70 parts by weight, to maintain mechanical properties such as elongation at break or tensile strength. The types of the plasticizers and rubber softening agents are not particularly limited. For example, plant oils, such as rapeseed oil, linseed oil, and soybean oil, ester plasticizers, such as di-(2-ethylhexyl)adipate, di-(2-ethylhexyl) sebacate, di-(2-ethylhexyl)phthalate, and di-(2-ethylhexyl)azelate, and mineral oil-based softening agents, such as processing oils, can be used. The plasticizer and/or rubber softening agent are/is added preferably in an amount from 5 to 40 parts by weight, and more preferably, from 10 to 30 parts by weight, to maintain tensile strength or elongation at break. Furthermore, other additives such as antiaging agents, processing aids, lubricants, flame retardants, vulcanizing agents, vulcanization accelerators, and vulcanization retardants, can be used as necessary.

The dynamic characteristics of the xanthogen-modified chloroprene rubber of the present invention is determined by a loss factor (tanδ) measured by a conventional dynamic mechanical analyzer after a xanthogen-modified chloroprene rubber composition obtained by blending various compounding agents into the xanthogen-modified chloroprene rubber is vulcanized.

The loss factor (tanδ) refers to a ratio (E"/E') of the loss modulus (E") to the storage elastic modulus (E') of the rubber, and the lower tanδ indicates the lower heat build-up and the superior dynamic characteristics.

### EXAMPLES

The present invention will be described in more detail with reference to the following working examples. However, the present invention is not limited thereto.

### Evaluation of dynamic characteristics

Per 100 g of xanthogen-modified chloroprene rubber, 30 g of carbon black, 4 g of magnesium oxide, 5 g of zinc oxide, and 0.35 g of ethylene thiourea were blended and kneaded on a roll to form a xanthogen-modified chloroprene rubber composition. This composition was vulcanized using conventional press vulcanization at 160°C for 25 minutes. The loss factor (tanδ) at 100°C of the obtained xanthogen-modified chloroprene rubber vulcanized product was measured using a dynamic viscoelastometer VR-7120 (manufactured by Ueshima Seisakusho Co., Ltd.) under the following conditions: initial strain of 5%, dynamic strain of 1%, and frequency of 1 Hz.

### Working Example 1

Per 1000 g of chloroprene as a monomer mixture, 8 g of diisopropyl xanthogen polysulfide represented by general formula (4) below (0.8 parts by weight of diisopropyl xanthogen polysulfide per 100 parts by weight of the monomer mixture) was added. To the mixture, an emulsified aqueous solution including 50 g of potassium salt of rosin acid, 10 g of sodium salt of a condensate of naphthalene sulfonic acid and formaldehyde, 3 g of sodium hydroxide, and 1000 g of water was mixed and stirred to be emulsified.

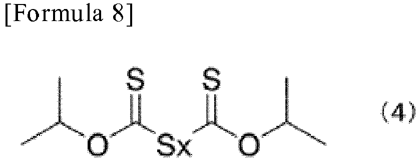

In the formula, x is an integer of 3 to 5.

To the mixture, a polymerization catalyst including 1 g of potassium persulfate, 0.1 g of sodium anthraquinone-β-sulfonate, and 300 g of water was added at a constant rate using a pump to perform emulsion polymerization at 30°C. The emulsion polymerization was performed by adding the polymerization catalyst to the point when the polymerization conversion rate reached 70%. Thereafter, the emulsion polymerization was terminated by adding a polymerization terminator containing 0.2 g of 4-t-butyl catechol, 1 g of sodium dodecyl benzenesulfonate, 10 g of chloroprene, and 10 g of water. After the completion of the emulsion polymerization, unreacted chloroprene was removed and collected from the latex by steam stripping under reduced pressure. Thereafter, the pH of the latex was adjusted to 6.0 using acetic acid, and the latex was frozen and solidified using a conventional method and then dried to obtain xanthogen-modified chloroprene rubber (0.15 parts by weight of diisopropyl xanthogen polysulfide per 100 parts by weight of the chloroprene rubber).

The purified product of the obtained xanthogen-modified chloroprene rubber (a product that was precipitated by dissolving the chloroprene rubber in toluene and then adding methanol; hereinafter the same) was analyzed by pyrolysis GC/MS using a methylating reagent. As a result, it was confirmed that a structure represented by general formula (1) that was derived from diisopropyl xanthogen polysulfide was introduced at a molecular terminal of the chloroprene rubber, since a spectrum that corresponds to dimethyl trisulfide, which indicates the presence of a sulfur chain, and a spectrum that corresponds to diisopropyl xanthogenate, which indicates the presence of a xanthogen backbone, were obtained.

The obtained xanthogen-modified chloroprene rubber was subjected to Mooney viscosity measurement in accordance with JIS K 6300-1:2001.

Next, evaluation of the dynamic characteristics of the xanthogen-modified chloroprene rubber was performed. The results are shown in Table 1. The loss factor (tanδ) was lower than those of comparative examples and the dynamic characteristics were superior.

**[Table 1]**

| | Working Example 1 | Working Example 2 | Working Example 3 | Working Example 4 | Working Example 5 | Comparative Example 1 | Comparative Example 2 | Comparative Example 3 |
|---|---|---|---|---|---|---|---|---|
| Mooney viscosity of raw rubber | | | | | | | | |
| ML(1+4)100°C | 40 | 85 | 82 | 50 | 39 | 40 | 40 | 45 |
| Blended composition (parts by weight) | | | | | | | | |
| Xanthogen-modified CR^{*1} | 100 | 100 | 100 | 100 | 100 | 100 | | |
| Mercaptan-modified CR | | | | | | | 100 | |
| Sulfur-modified CR | | | | | | | | 100 |
| Carbon black | 30 | 30 | 30 | 30 | 30 | 30 | 30 | 30 |
| Magnesium oxide | 4 | 4 | 4 | 4 | 4 | 4 | 4 | 4 |
| Zinc oxide | 5 | 5 | 5 | 5 | 5 | 5 | 5 | 5 |
| Stearic acid | | | | | | | | 0.5 |
| Ethylene thiourea | 0.35 | 0.35 | 0.35 | 0.35 | 0.35 | 0.35 | 0.35 | |
| Dynamic characteristics^{*2} | | | | | | | | |
| tanδ (E"/E') | 0.035 | 0.037 | 0.040 | 0.037 | 0.036 | 0.060 | 0.100 | 0.051 |

| | | | | | | | | |
|---|---|---|---|---|---|---|---|---|
| *1 CR: chloroprene rubber *2 Measurement conditions: temperature of 100°C; frequency of 1 Hz; static strain of 5% and dynamic strain of 1% | | | | | | | | |

### Working Example 2

Xanthogen-modified chloroprene rubber (0.10 parts by weight of diisopropyl xanthogen polysulfide per 100 parts by weight of the chloroprene rubber) was obtained in the same manner as in Working Example 1 except for changing the chain transfer agent to 5 g of diisopropyl xanthogen polysulfide (0.5 parts by weight of diisopropyl xanthogen polysulfide per 100 parts by weight of the monomer mixture).

The purified product of the obtained xanthogen-modified chloroprene rubber was analyzed by pyrolysis GC/MS in the same manner as in Working Example 1, and the same result was obtained.

The obtained xanthogen-modified chloroprene rubber was subjected to measurement of Mooney viscosity and evaluation of dynamic characteristics. The results are shown in Table 1. The loss factor (tanδ) was lower than those of comparative examples and the dynamic characteristics were superior.

### Working Example 3

Xanthogen-modified chloroprene rubber (0.08 parts by weight of diisopropyl xanthogen polysulfide per 100 parts by weight of the chloroprene rubber) was obtained in the same manner as in Working Example 1 except for changing the chain transfer agent to 4 g of diisopropyl xanthogen polysulfide (0.4 parts by weight of diisopropyl xanthogen polysulfide per 100 parts by weight of the monomer mixture) and 1 g of diethyl xanthogen disulfide (0.1 parts by weight of diisopropyl xanthogen polysulfide per 100 parts by weight of the monomer mixture).

The purified product of the obtained xanthogen-modified chloroprene rubber was analyzed by pyrolysis GC/MS in the same manner as in Working Example 1, and the same result was obtained.

The obtained xanthogen-modified chloroprene rubber was subjected to measurement of Mooney viscosity and evaluation of dynamic characteristics. The results are shown in Table 1. The loss factor (tanδ) was lower than those of comparative examples and the dynamic characteristics were superior.

### Working Example 4

Xanthogen-modified chloroprene rubber (0.15 parts by weight of diisopropyl xanthogen polysulfide per 100 parts by weight of the chloroprene rubber) was obtained in the same manner as in Working Example 1 except for performing emulsion polymerization at 25°C using, as the monomer compound, 900 g of chloroprene and 100 g of 2,3-dichloro-1,3-butadiene.

The purified product of the obtained xanthogen-modified chloroprene rubber was analyzed by pyrolysis GC/MS in the same manner as in Working Example 1, and the same result was obtained.

The obtained xanthogen-modified chloroprene rubber was subjected to measurement of Mooney viscosity and evaluation of dynamic characteristics. The results are shown in Table 1. The loss factor (tanδ) was lower than those of comparative examples and the dynamic characteristics were superior.

### Working Example 5

Xanthogen-modified chloroprene rubber (0.10 parts by weight of diethyl xanthogen tetrasulfide per 100 parts by weight of the chloroprene rubber) was obtained in the same manner as in Working Example 1 except for changing the chain transfer agent to 5 g of diethyl xanthogen tetrasulfide (in general formula (2), R is an ethyl group and x is 4; 0.5 parts by weight of diethyl xanthogen tetrasulfide per 100 parts by weight of the monomer mixture).

The purified product of the obtained xanthogen-modified chloroprene rubber was analyzed by pyrolysis GC/MS in the same manner as in Working Example 1, and the same result was obtained.

The obtained xanthogen-modified chloroprene rubber was subjected to measurement of Mooney viscosity and evaluation of dynamic characteristics. The results are shown in Table 1. The loss factor (tanδ) was lower than those of comparative examples and the dynamic characteristics were superior.

### Comparative Example 1

Xanthogen-modified chloroprene rubber was obtained in the same manner as in Working Example 1 except for changing diisopropyl xanthogen polysulfide as the chain transfer agent to 8 g of diethyl xanthogen disulfide.

The purified product of the obtained xanthogen-modified chloroprene rubber was analyzed by pyrolysis GC/MS in the same manner as in Working Example 1; however, a spectrum that corresponds to dimethyl trisulfide was not observed, and introduction of a structure derived from xanthogen polysulfide was not confirmed.

The obtained xanthogen-modified chloroprene rubber was subjected to measurement of Mooney viscosity and evaluation of dynamic characteristics. The results are shown in Table 1. The loss factor (tanδ) was higher than those of working examples and the dynamic characteristics were inferior.

### Comparative Example 2

Mercaptan-modified chloroprene rubber was obtained in the same manner as in Working Example 1 except for changing diisopropyl xanthogen polysulfide as the chain transfer agent to 10 g of dodecyl mercaptan.

The obtained mercaptan-modified chloroprene rubber was subjected to measurement of Mooney viscosity and evaluation of dynamic characteristics. The results are shown in Table 1. The loss factor (tanδ) was higher than those of working examples and the dynamic characteristics were inferior.

### Comparative Example 3

Per 1000 g of chloroprene as a monomer mixture, 3 g of sulfur was added. To the mixture, an emulsified aqueous solution formed from 4 g of potassium salt of rosin acid, 5 g of sodium salt of a condensate of naphthalene sulfonic acid and formaldehyde, 0.5 g of sodium hydroxide, 10 g of sodium orthophosphate, and 1000 g of water was mixed and stirred to be emulsified. To the mixture, a polymerization catalyst formed from 10 g of potassium persulfate, 0.1 g of sodium anthraquinone-β-sulfonate, and 300 g of water was added at a constant rate using a pump to perform polymerization. To the mixture, a polymerization terminator formed from 0.2 g of 4-t-butyl catechol, 1 g of sodium dodecyl benzenesulfonate, 10 g of chloroprene, and 10 g of water was added to terminate the polymerization at a polymerization conversion rate of approximately 70%. To the latex after the termination of the polymerization, 20 g of tetraethylthiuram disulfide and 2 g of dimethylammonium dimethyldithiocarbamate were added and peptized at 23°C for approximately 15 hours. After the completion of the peptization, unreacted chloroprene was removed and collected from the latex by steam stripping under reduced pressure. Thereafter, the pH of the latex was adjusted to 6.0 using acetic acid, and the latex was frozen and solidified using a conventional method. Then the polymer was dried to obtain sulfur-modified chloroprene rubber.

Mooney viscosity of the obtained sulfur-modified chloroprene rubber was measured in the same manner as in Working Example 1.

Then, to evaluate dynamic characteristics of this sulfur-modified chloroprene rubber, 30 g of carbon black, 4 g of magnesium oxide, 5 g of zinc oxide, and 0.5 g of stearic acid, per 100 g of the chloroprene rubber, were blended and kneaded on a roll. This composition was vulcanized using conventional press vulcanization at 160°C for 15 minutes. The obtained composition was evaluated in the same manner as in working examples. The results are shown in Table 1. The loss factor (tanδ) was higher than those of working examples and the dynamic characteristics were inferior.

The present invention has been described in detail with reference to specific embodiments, but, it is obvious for a person skilled in the art that various changes and modifications are possible without departing from the intention and the scope of the present invention.

This application is based on a Japanese patent application filed on November 16, 2012 (Japanese Patent Application No. 2012-252258), and the contents thereof is incorporated herein by reference.

### Industrial Applicability

The xanthogen-modified chloroprene rubber composition that is obtained by mixing the xanthogen-modified chloroprene rubber of the present invention with various compounding agents can be used in applications for which high dynamic characteristics are required, such as a transmission belt for automobiles and/or industrial use.

## Claims

1. A xanthogen-modified chloroprene rubber comprising a structure represented by general formula (1) below at a molecular terminal of a chloroprene rubber: 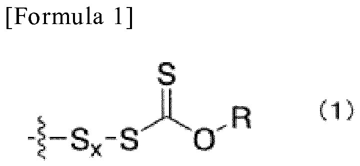 wherein, R represents an alkyl group, and x is an integer of 1 or greater.

2. A xanthogen-modified chloroprene rubber comprising dialkyl xanthogen polysulfide represented by general formula (2) below: 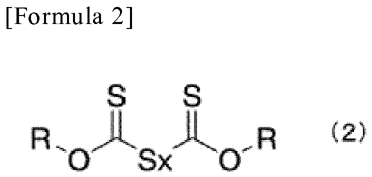 wherein, R represents an alkyl group, and x is an integer of 3 or greater.

3. A method for producing the xanthogen-modified chloroprene rubber described in claim 1 or 2, the method comprising subjecting chloroprene or a mixture of chloroprene and a monomer copolymerizable with the chloroprene to emulsion polymerization in the presence of dialkyl xanthogen polysulfide represented by general formula (2): 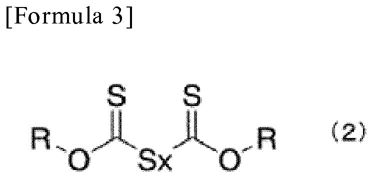 wherein, R represents an alkyl group, and x is an integer of 3 or greater.

4. A vulcanized product of a xanthogen-modified chloroprene rubber composition obtained by kneading the xanthogen-modified chloroprene rubber described in claim 1 or 2 with a compounding agent and then vulcanizing the kneaded mixture.
